# EUROPEAN PATENT SPECIFICATION

(11) **EP 3 450 802 B1**
(45) Date of publication and mention of the grant of the patent: **09.12.2020**
(21) Application number: 17275129.9
(22) Date of filing: 31.08.2017
(51) Int. Cl.: F16J 15/3256, B64C 13/28

(54) **ROTARY SEAL**
GLEITRINGDICHTUNG
JOINT ROTATIF

(43) Date of publication of application: 06.03.2019
(73) Proprietor: Goodrich Actuation Systems Limited, West Midlands B90 4SS (GB)
(72) Inventor: KRACKE, Jeremy, Stone, Staffordshire ST15 8FG (GB); TIMMS, Mark, Wolverhampton, WV10 6NU (GB)
(74) Representative: Dehns

(56) References cited:
- EP-A1- 1 777 446
- EP-A1- 2 547 933
- CN-U- 202 381 692
- GB-A- 2 077 371
- US-A- 5 944 148
- US-A1- 2002 011 710

## Description

### Technical Field

The present invention relates to a rotary seal with an integrated leakage collection system. The rotary seal may be applied to a cylindrical surface, such as a rotary surface of a shaft or a seal attached to a shaft. In particular the present invention relates to a rotary seal for sealing shafts in flight controls of an aircraft. The rotary seal may be used, for example, to seal shafts of gearboxes, rotary actuators or secondary actuators within a flight control system of an aircraft.

### Background of the disclosure

Rotary seals are used in a number of mechanical systems, such as mechanical actuators and gearboxes, in order to provide a fluid tight seal. A rotary seal is conventionally employed about a shaft which is rotatable within a stationary housing, wherein the shaft protrudes through an opening in the housing. The seal prevents fluid, such as lubricant, from leaking out of the housing around the shaft while also preventing debris, contaminants or other fluids from entering the housing.

Rotary seals may be utilised in aircraft flight control systems, e.g. secondary and primary flight control systems. Aircraft flight control systems employ numerous operating mechanisms to aid in controlling an aircraft's character and direction in flight, for example to operate the secondary control surfaces such as flaps and slats or primary control surfaces of the aircraft, such as ailerons, elevators and rudders, to control the roll, pitch and yaw of the aircraft. Such systems typically employ mechanical systems such as power control units, gearboxes and actuators to convert commands input to the aircraft controls into movement of the relevant control surfaces. These mechanical systems often include rotatable shafts which require sealing to prevent leakage of fluid, and rotary seals are commonly deployed in such systems for this purpose.

The strength of the seal that is provided by a rotary seal is finely tuned to fall between two extremes: zero leakage and long seal life. It is desirable to prevent leakage of fluid as best as possible so that the fluid does not contaminate the surrounding environment. However excessive wear on the seal can occur if the sealing surface of the rotary seal is devoid of lubrication. Without small amounts of fluid penetrating between the sealing surfaces, friction caused by the relative motion of the sealing surfaces can lead to excessive wear on the sealing surfaces of the seal. This can lead to a failure of the seal and a reduction of the working life of the seal. Therefore, to prolong the life span of the seal, typically a small amount of fluid is allowed to leak through the sealing surfaces so as to lubricate the sealing surfaces.

There is a need for an improved rotary seal that enables lubrication of the seal whilst preventing leakage of fluid to the surrounding environment.

US2002/011710 A1 discloses a seal and a method of sealing dynamic shaft applications. The seal comprises an inner portion, an outer portion, a faceplate, and at least one flexible member located between the inner and outer portions. More particularly, it further discloses that a flexible filtering material, such as a piece of wool felt or a synthetic filtering material, is located between a faceplate and an outside face of a sleeve flange.

### Summary of the Disclosure

Viewed from a first aspect, the present disclosure provides a rotary seal for sealing around shafts in flight controls of an aircraft, the rotary seal comprising: an annular first sealing surface for sealing against a housing; an annular second sealing surface for sealing against a rotatable surface; a reservoir arranged for receiving a fluid that is leaked past the second sealing surface; and a sorbent material within the reservoir for absorbing and/or adsorbing the fluid received within the reservoir, characterised in that the sorbent material is a powder

Thus the sorbent material is an absorbent and/or adsorbent material.

In some embodiments approximately 4.3 cm³ of fluid will leak past the second sealing surface and travel to the reservoir over the lifespan of the rotary seal. Thus, the reservoir may define a volume of less than 4.5 cm³. The reservoir may define a volume of approximately 4.3 cm³.

A point of ingress of fluid to the rotary seal may be formed where the second sealing surface seals against the rotatable surface. A leakage path may be formed within the rotary seal between the point of ingress and the reservoir. Thus, fluid may leak past the second sealing surface and travel along the leakage path to the reservoir. The leakage path may be considered as a leakage passage. It may be a recess within the rotary seal.

Thus, in embodiments, a leakage passage may be provided within the rotary seal between a point of ingress to the rotary seal where the second sealing surface seals against the rotatable surface, and the reservoir. Thus, fluid that may leak past the second sealing surface may travel through the passage to the reservoir.

The first sealing surface and the second sealing surface may be provided by an annular housing seal. The rotary seal may further comprise a further annular seal for sealing against a rotary cylindrical surface within the housing, wherein the further annular seal is rotatable with respect to the housing seal. The rotatable surface may comprise a surface of the further annular seal. Optionally, the reservoir may be arranged between the housing seal and the further annular seal.

Generally, the further annular seal may be considered as a shaft seal and the cylindrical surface may be considered as a shaft. Thus, the shaft seal may be for sealing against a shaft within a housing.

It will be appreciated that, when the rotary seal is installed on a rotary cylindrical surface within a housing, the housing seal generally remains stationary with respect to the housing, and the further annular seal generally rotates with the rotary cylindrical surface. The housing seal may be fixed to the housing, e.g. by an interference fit or friction fit or additionally by means of a retainer or clip attached to the housing. The further annular seal may be fixed to the rotary cylindrical surface, e.g. by an interference fit or friction fit.

The annular housing seal may comprise a radially outer surface for affixing to and sealing against a housing. The further annular seal may comprise a radially inner surface for affixing to and sealing against a rotary cylindrical surface. The radially outer surface of the housing seal may be radially outward of the radially inner surface of the further annular seal.

It will be appreciated that a point of ingress of fluid to the rotary seal may be formed where the second sealing surface seals against the further annular seal. Thus, the above described leakage path, or leakage passage, may be formed within the rotary seal between the point of ingress and the reservoir. The leakage path may be defined between a portion of the housing seal and a portion of the further annular seal.

In addition to one or more of the features described above, the sorbent powder may comprise a superabsorbent polymer or aluminium oxide.

In addition to one or more of the features described above, the sorbent material may be coupled to an internal surface of the rotary seal that defines the reservoir.

In addition to one or more of the features described above, the second sealing surface may provide a primary sealing mechanism for the rotary seal. The primary sealing mechanism may comprise a self-energised seal or an energised seal having an energiser which provides a sealing force directed radially inwards. In the case that the primary sealing mechanism is an energised seal, optionally, the energiser is a metallic spring or comprises an elastic material, wherein the elastic material may be selected from silicone, fluorocarbons and ethylene propylene diene Monomer (M-class) rubber (EPDM).

In addition to one or more of the features described above, the rotary seal may be a cassette seal.

In addition to one or more of the features described above, the housing seal and the further annular seal may each comprise a structural member overmolded with an elastomeric material.

In addition to one or more of the features described above, the structural members may be made from any one of stainless steel, titanium nitride coated steel, hardened steel, glass fiber reinforced polyether ether ketone (PEEK) or carbon fiber reinforced polyether ether ketone (PEEK).

Additionally the elastomeric material may be any one of carbon fiber reinforced polytetrafluoroethylene (PTFE), aromatic polymer fiber reinforced polytetrafluoroethylene (PTFE), glass fiber reinforced polytetrafluoroethylene (PTFE), fluoroelastomer (FKM), vinyl methyl silicone (VMQ), fluoro silicone (FMQ), ethylene propylene (EP), polyether ether ketone (PEEK), polyurethane (PU), alkyl acrylate copolymer (ACM), acrylonitrile butadiene rubber, nitrile butadiene rubber (NBR) or perfluoroelastomer (FFKM).

In addition to one or more of the features described above, an inner diameter of the further annular seal is less than 55 mm. In embodiments, the inner diameter of the further annular seal is between 30 mm and 50 mm.

In addition to one or more of the features described above, an outer diameter of the housing seal is less than 75 mm. In embodiments, the outer diameter of the housing seal is between 50 mm and 70 mm.

In addition to one or more of the features described above, the rotary seal may further comprise at least one wiper seal arranged to prevent ingress of contaminants into the reservoir. For example, the further annular seal may include a wiper seal at its radially outward end that abuts against an inside surface of the housing seal. It will be appreciated that the placement of the wiper seal would generally be at a point of ingress to the reservoir, generally in a flow path extending from a location external to the housing and into the reservoir. Thus the wiper seal helps avoid contaminants from entering the reservoir, e.g. from a location external to the housing. Additionally, the wiper seal may provide sealing between the further annular seal and the housing seal whilst allowing for relative rotational motion between the further annular seal and the housing seal. Wiper seals may also be known as sliding seals.

Additionally the rotary seal may further comprise at least one wiper seal arranged to prevent egress of contaminants from the reservoir past the second sealing surface. The at least one wiper seal may be located in the above described leakage passage. It will be appreciated that placement of a wiper seal in the leakage passage will provide additional protection to the second sealing surface from contaminants, and help to prevent contaminants from exiting the reservoir in the rotary seal past the second sealing surface and into the housing. Thus, any contaminants that enter the reservoir may be prevented from travelling to the second sealing surface by a wiper seal positioned in the leakage passage. A second wiper seal may be provided in the leakage passage to provide yet further protection from contaminants.

It will be further appreciated that the wiper seal(s) may provide sealing between the further annular seal and the housing seal whilst allowing for relative rotational motion between the further annular seal and the housing seal.

Viewed from a second aspect, the present disclosure provides a method of sealing around a rotary cylindrical surface within a housing using a rotary seal provided on the cylindrical surface, wherein the rotary seal comprises an annular first sealing surface for sealing against the housing and an annular second sealing surface for sealing against a rotating surface, the method comprising: allowing fluid to leak past the second sealing surface for lubrication of the second sealing surface; collecting the fluid in a reservoir within the rotary seal; and absorbing and/or adsorbing the fluid within the reservoir to hold the fluid within the rotary seal and prevent leakage of the fluid out of the reservoir, wherein the fluid collected within the reservoir is absorbed and/or adsorbed by a sorbent material provided within the reservoir, characterised in that the sorbent material is a powder.

The method may use a rotary seal having any of the features described above in relation to the first aspect and embodiments thereof. The rotary seal may comprise an annular housing seal for sealing against the housing and a further annular seal for sealing against the cylindrical surface within the housing. The further annular seal may be rotatable with respect to the housing seal. The housing seal may comprise the first annular sealing surface and the second annular sealing surface, and the rotating surface may comprise a surface of the further annular seal. Optionally, the reservoir may be arranged between the housing seal and the further annular seal.

It will be appreciated that, generally, the housing seal remains stationary with respect to the housing, and the further annular seal rotates with the cylindrical surface.

Viewed from a third aspect, the present disclosure provides an assembly comprising: a shaft and a housing, wherein the shaft extends through an opening in the housing; and a rotary seal according to any of the above described embodiments; wherein the rotary seal is mounted on the shaft for sealing between the shaft and the housing. The assembly may comprise a gearbox.

It will be appreciated that, generally, the housing seal remains stationary with respect to the housing, and the further annular seal rotates with the shaft.

In a further aspect of the present disclosure, there is provided a flight control system comprising an assembly according to the third aspect.

In yet another aspect of the present disclosure, there is provided a method of installing a rotary seal according to any of the above described embodiments, the method comprising deploying the rotary seal between the outside of a rotary cylindrical surface and an opening in a housing.

The rotary seal may seal against the housing and the rotary cylindrical surface. The rotary cylindrical surface may be a shaft within the housing.

The method may comprise sliding the seal onto the outside of the shaft and pushing the seal along the shaft into an annular gap between the outside of the shaft and the inside of the opening in the housing.

The method may comprise pushing the seal from a side of the seal that is perpendicular to a longitudinal axis of the shaft. The seal will generally be pushed by a pusher. The pusher will generally provide an even pushing force across the side of the seal, e.g. so that the entire seal advances along the shaft at the same rate.

The seal may be held in place on the shaft by a friction fit. A retainer on the housing may be used to hold the seal in place in the housing.

A rotary seal for sealing around shafts in flight controls of an aircraft, according to the invention, is defined by appended independent claim 1, with optional features thereof defined in the appended dependent claims 2-10 and 13-14.

A method of sealing a rotary cylindrical surface within a housing using a rotary seal provided on the cylindrical surface, according to the invention, is defined by appended independent claim 11, with optional steps thereof defined in the appended dependent claim 12.

A method of installing a rotary seal according to the invention is defined by appended independent claim 15.

It will be readily appreciated by the skilled person that the various optional and preferred features of embodiments of the disclosure described above may be applicable to all the various aspects of the disclosure discussed. In particular, features of embodiments of the first aspect may be equally applicable to the method of the second aspect.

### Brief description of the Figures

Certain preferred embodiments on the present disclosure will now be described in greater detail, by way of example only and with reference to the accompanying drawings, in which:
Figure 1 illustrates a rotary seal according to an exemplary embodiment of the disclosure;
Figure 2 is a cross-sectional view of the rotary seal of Figure 1; and
Figure 3 shows the rotary seal of Figures 1 and 2 installed on a shaft within a housing.

### Detailed description

By way of example, the present disclosure is described in the context of a cassette seal for sealing between a rotatable shaft and an opening formed in a housing through which the shaft extends. Whilst a cassette seal is considered to offer advantageous benefits, it is envisaged that other forms of rotary seal may benefit from the subject of this disclosure. For example, the seal may be a lipped seal or any standard energised seal. The seal may e.g. run directly on a shaft, on a surface plated directly on the shaft, or on a sleeve provided on a shaft. Furthermore, it will be appreciated that whilst the present disclosure is discussed in the context of a rotary seal for sealing a shaft, e.g. a shaft in aircraft flight controls, the seal may be applied equally to any cylindrical surface.

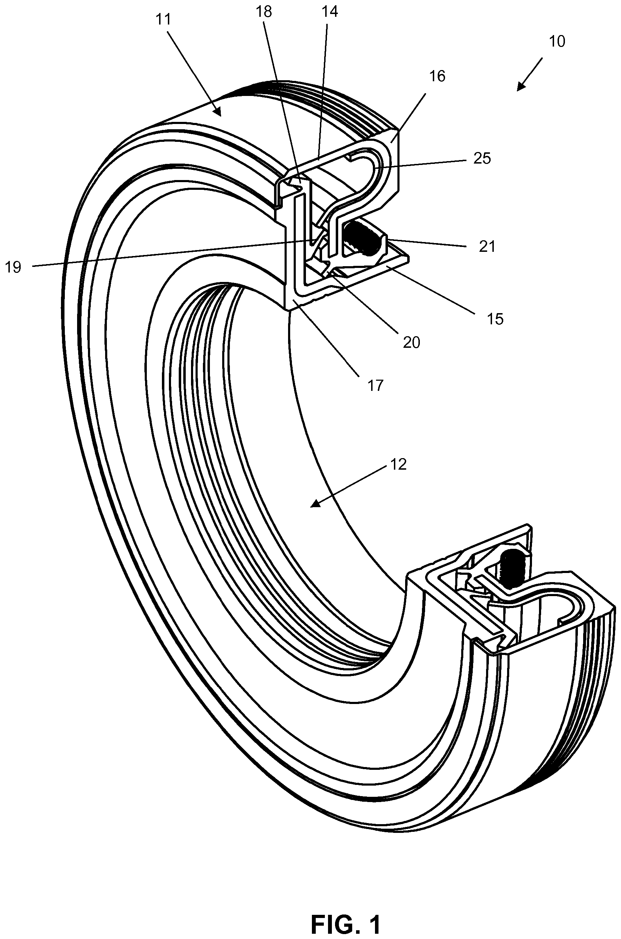

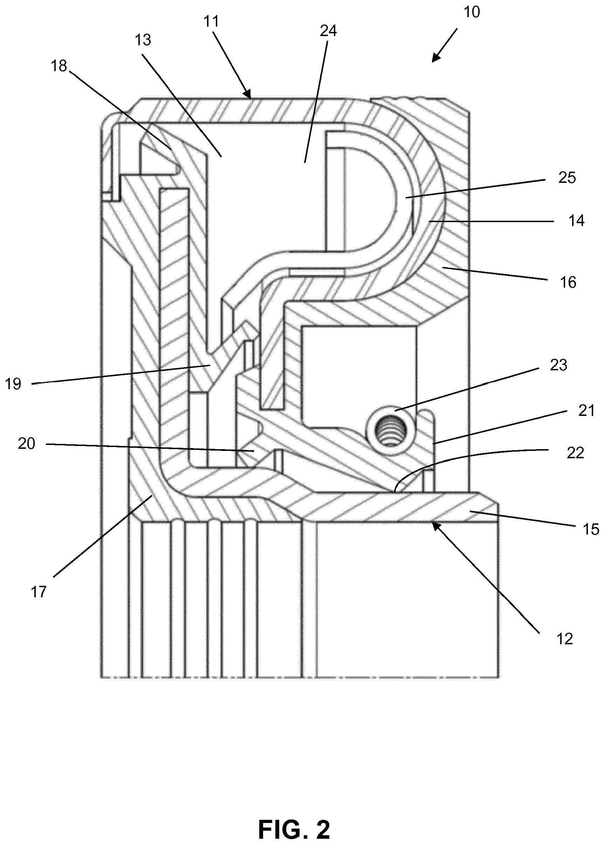

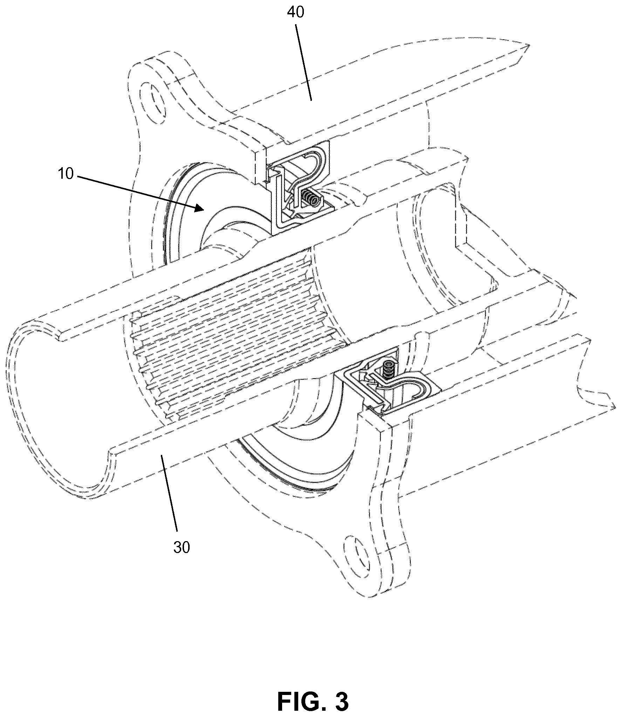

The exemplary rotary seal 10 is shown in Figures 1 and 2. In this example, the rotary shaft seal 10 comprises an annular housing seal 11 and a further annular seal. The housing seal 11 has a larger outer diameter than the further annular seal and has an annular first sealing surface for sealing against an inner surface of an opening through which a shaft protrudes. The outer diameter of the housing seal 11, and hence the outer diameter of the rotary seal 10, may be less than about 75 mm. For example, the outer diameter of the rotary seal 10 may be between about 50 mm and about 70 mm. In this exemplary embodiment, the further annular seal is a shaft seal 12. The shaft seal 12 has a smaller inner diameter than the housing seal 11 and is for sealing against a rotary cylindrical surface, in this case a rotatable shaft 30 (see Figure 3). The inner diameter of the shaft seal 12, and hence the inner diameter of the rotary seal 10, may be less than about 55 mm. For example, the inner diameter of the rotary seal 10 may be between about 30 mm and about 50 mm. These size ranges are appropriate for the rotary seal 10 to be utilised in aircraft flight control systems.

The housing seal 11 and the shaft seal 12 form a single annular sealing unit, i.e. the rotary seal 10. The shaft seal 12 is rotatable with respect to the housing seal 11, and vice versa. In Figure 3, the rotary seal 10 is shown installed on a shaft 30 within a housing 40. For clarity, the rotary seal 10 is shown in solid lines, while the shaft 30 and the housing 40 are shown in dashed lines. In use, the housing seal 11 is fixed to and seals against the housing 40, whilst the shaft seal 12 is fixed to and seals against the shaft 30. The shaft seal 12 may be fixed to the shaft 30, for example, by interference fit or friction fit. The housing seal 11 may be fixed to the housing 40 by an interference fit or friction fit, and may additionally be fixed to a retainer or clip attached to the housing 40. Thus, the housing seal 11 remains stationary with respect to the housing 40 through which the shaft 30 extends, and the shaft seal 12 rotates with the shaft 30 (i.e. rotates with respect to the housing seal 11 and housing 40). As can be seen from Figure 2, an internal volume 13 is formed between the shaft seal 12 and the housing seal 11 within the rotary seal 10.

Both the housing seal 11 and the shaft seal 12 include structural (strengthening) members 14, 15 respectively to prevent the rotary seal 10 from deforming. This ensures that reliable fitting of the rotary seal 10 is maintained throughout its working life. In this example, the structural members 14, 15 are formed of stainless steel, however they could also be made from any high strength and high wear resistant materials, for example case hardened materials and corrosion wear resistant materials, such as titanium nitride coated steel or hardened steel.

In order to form a tight seal against a shaft 30 and its housing 40, the structural members 14, 15 are overmolded with an elastomeric material, providing the housing seal 11 and the shaft seal 12 with elastomeric sections 16, 17 respectively. The elastomeric sections 16, 17 provide the rotary seal 10 with deformable surfaces which can deform to match the surfaces of a shaft 30 and shaft housing 40 respectively. In this instance, the elastomeric sections 16, 17 are formed of fluoroelastomer (FKM). Depending on the intended use of the rotary seal 10, it may be subjected to different environments, where different pressures, temperatures and/or types of fluids are experienced. It is therefore anticipated that the elastomeric material of the elastomeric sections 16, 17 may comprise any elastomeric material suitable for the intended use of the rotary seal 10, e.g. suitable for the particular fluid and environment. For example, the elastomeric sections 16, 17 may be made of carbon fiber reinforced polytetrafluoroethylene (PTFE), aromatic polymer fiber reinforced polytetrafluoroethylene (PTFE), glass fiber reinforced polytetrafluoroethylene (PTFE), fluoroelastomer (FKM), vinyl methyl silicone (VMQ), fluoro silicone (FMQ), ethylene propylene (EP), polyether ether ketone (PEEK), polyurethane (PU), alkyl acrylate copolymer (ACM), acrylonitrile butadiene rubber, nitrile butadiene rubber (NBR) or perfluoroelastomer (FFKM).

The elastomeric section 17 of the shaft seal 12 forms a wiper seal 18 abutting against the inside surface of the strengthening member 14 of the housing seal 11 at the radially outward end of the shaft seal 12. The location of abutment of the wiper seal 18 against the inside surface of the strengthening member 14 is at a point of ingress to the internal volume 13. The wiper seal 18 provides sealing between the shaft seal 12 and the housing seal 18 whilst also allowing for relative rotational motion of the shaft seal 12 with respect to the housing seal 18. Thus, the wiper seal 18 helps to prevent dirt and contaminants from entering the internal volume 13, thereby helping prevent dirt or contaminants from travelling through the rotary seal 10 and into the shaft housing 40. Additional wiper seals 19, 20 may also be provided within the rotary seal 10 to reduce the risk of contaminants present in the reservoir 24 from entering the shaft housing 40. As can be seen from Figure 2, the elastomeric section 17 of the shaft seal 12 may form a wiper seal 19 abutting against the inside surface of the strengthening member 14 of the housing seal 12 at a location within the internal volume 13. Additionally or alternatively, the elastomeric section 16 of the housing seal 11 may form a wiper seal 20 abutting against the inside surface of the strengthening member 15 of the shaft seal 12 at a location within the internal volume 13. As with the wiper seal 18, the additional wiper seals 19, 20 enable further sealing between the shaft seal 12 and the housing seal 18 whilst allowing for relative rotational motion of the shaft seal 12 with respect to the housing seal 18. The additional wiper seals 19, 20 aid in preventing dirt and contaminants that have entered the internal volume 13 from travelling into the shaft housing 40.

A primary sealing mechanism 21 for sealing against a rotatable shaft is provided by a spring energised seal. At a radially inner side of the housing seal 11, the elastomeric section 16 extends axially from the structural member 14 and provides the housing seal 11 with an annular second sealing surface. In this case the second sealing surface is a sealing surface 22 that contacts a radially outer surface of the strengthening member 15 of the shaft seal 12. An energiser 23 is provided on a radially outer surface of the sealing surface 22 to provide a sealing force directed radially inwards. In this exemplary embodiment, the energiser 23 is a metallic spring. In alternative embodiments, the energiser 23 may be made of any elastic material, for example, silicone, fluorocarbons or ethylene propylene diene Monomer (M-class) rubber (EPDM). The elastic material will generally be chosen to be compatible with the fluid that is being sealed.

Alternatively, the primary sealing mechanism 21 may be provided by a self-energised seal. For example, the elastomeric material 16 forming the sealing surface 22 may be formed so that its inner diameter is smaller than the diameter of the radially outer surface of the strengthening member 15 of the shaft seal 12. The elasticity of the elastomeric material 16 would therefore provide a sealing force directed radially inwards towards the outer surface of the strengthening member 15.

With reference to Figure 2, it can be seen that the internal volume 13 forms a reservoir 24 within the rotary seal 10. When in use, it is desirable for a small amount of fluid to enter the internal volume 13 through the primary sealing mechanism 21. For example, a volume of fluid in the region of one drop may pass through the primary sealing mechanism 21 for every 1000 rotations of the shaft 30. It is noted that a "drop" is a known unit of measure typically used as a visual guide. It will be appreciated that the volume of a "drop" is dependent on the properties of the liquid being measured, for example its viscosity and temperature. In one example, 15.4 drops may be equal to approximately 1 cm³, i.e. 1 drop is approximately 0.065 cm³. Alternatively, a volume of fluid in the region of 1 cm³ may pass through the primary sealing mechanism 21 for every 14000 rotations of the shaft 30. In such an embodiment, the shaft may be an intermittent use fully reversing diameter 35 shaft with mineral oil lubrication and 1.45m/s maximum surface speed.

This fluid acts to lubricate the primary sealing mechanism 21, preventing excessive wear of the sealing surface 22 caused by the sealing surface 22 rubbing against the strengthening member 15 of the shaft seal 12 as the shaft seal 12 rotates with the shaft. By reducing the wear on the sealing surface 22, the rotary seal 10 is less likely to fail and the working life of the rotary seal 10 is prolonged. The fluid enters the rotary seal 10 through the primary sealing mechanism 21 and then moves to the reservoir 24.

Thus a point of ingress of fluid to the rotary seal 10 is formed where the sealing surface 22 seals against the shaft seal 12. A leakage path is formed within the rotary seal 10 between the point of ingress and the reservoir 24 so that fluid can leak past the sealing surface 22 and travel along the leakage path to the reservoir 24. The leakage path may be considered as a leakage passage. In this embodiment it is a recess within the rotary seal 10 defined between a portion of the housing seal 11 and a portion of the shaft seal 12.

In embodiments that also include wiper seal 19 and/or wiper seal 20, these may be located in the leakage path. The fluid enters the rotary seal 10 through the primary sealing mechanism 21 and passes through the wiper seals 19, 20 before moving to the reservoir 24. The additional wiper seals 19, 20 also help to prevent dirt and contaminants from reaching the primary sealing mechanism 21, reducing the wear on the sealing surface 22 that such contaminants may cause.

The wiper seal 18 is designed to prevent ingress of dirt or contaminants into the internal volume 13, and is not primarily designed to prevent fluid from leaking from the reservoir 24 and out of the rotary seal 10. Therefore, there is potential for fluid to leak past the wiper seal 18.

To prevent fluid from leaking from the rotary seal 10, a sorbent material 25 is placed within the reservoir 24 to hold the fluid and trap it within the rotary seal 10. The sorbent material 25 may be attached to an interior wall of the housing seal 11, within the reservoir 24. Additionally, or alternatively, the sorbent material 25 may fill the reservoir 24. By filling the reservoir 24 with the sorbent material 25, dirt and contaminants that enter the internal volume 13 past the wiper seal 18 may also be trapped by the sorbent material 25 and prevented from leaving the reservoir 24 and entering the shaft housing.

In one example not forming part of the present invention, but which may be useful for understanding it, the sorbent material 25 may be a woven or felted fiber sheet affixed to the interior wall of the housing seal 11. The sorbent material 25 may for example comprise fibers of cotton, nylon, polypropylene or wool. In an exemplary embodiment, commensurate with the claimed invention, the sorbent material 25 is a powder which coats the interior walls of the reservoir 24 or is packed within the reservoir 24. The powder may comprise for example, a superabsorbent polymer or aluminium oxide. The type of sorbent material 25 used within the rotary seal 10 may depend on the fluid that is to be absorbed and/or adsorbed. For example, the sorbent material 25 may be a material suitable for absorbing and/or adsorbing semi-fluid grease (i.e. a low viscosity grease) and/or semi-fluid oil. Such semi-fluids may be used, for example, in gearboxes for lubrication purposes.

The reservoir 24 and sorbent material 25 are made large enough to collect and hold the volume of fluid expected to pass through the primary sealing mechanism 21 throughout the lifespan of a fully functioning rotary seal 10. Therefore, there is no need to empty the reservoir 24, or replace the sorbent material 25, before the rotary seal 10 would be expected to be replaced due to wearing out of the primary sealing mechanism 21 or other age related defects. It is anticipated that approximately 4.3 cm³ of fluid may pass through the primary sealing mechanism 21 and travel to the reservoir 24 over the lifespan of the rotary seal 10. Thus, the reservoir 24 may have a total volume of 4.3 cm³.

The sorbent material 25 placed within the reservoir 24 prevents leakage of fluid from the interior of the housing and through the rotary seal 10, whilst allowing a small amount of fluid to pass through the primary sealing mechanism 21 in order to provide lubrication of the primary sealing mechanism 21. The reservoir 24 and the sorbent material 25 are integral to the rotary seal 10 therefore there is no need for an external leakage collection system. Such collection systems may become detached from the rotary seal 10 during use which would clearly be highly problematic. For example, vibrations in the mechanical system may cause a collection system to disconnect, causing leakage of fluid.

The rotary seal 10 may form a component of a mechanical system, for example a gearbox or actuator of a flight control system of an aircraft. The rotary seal 10 may need to be replaced at service intervals of the mechanical system if tests indicate that the rotary seal 10 has become worn or is otherwise defective. The rotary seal 10 forms an integral unit that can be tested and certified at the factory prior to shipping to customers. Therefore, the rotary seal 10 may be replaced, in the field, without having to re-test and re-certify the assembled mechanical system. This can simplify maintenance of the mechanical system, avoiding potentially lengthy testing of the system which may require the system to be out of action for a prolonged period of time, and also allows for repairs to be carried out in the field without having to ship the system back to the factory for extensive maintenance and testing.

As will be appreciated from the above description, in use, the housing seal 11 is fixed to the housing 40 through which a shaft 30 extends. The housing seal 11 therefore remains stationary with respect to the housing 40. The shaft seal 12 is fixed to the shaft 30 and rotates with the shaft 30. Thus, the shaft seal 12 rotates with respect to the housing seal 11. The rotary seal 10 prevents fluid within the housing 40 from leaking out of the opening in the housing 40 around the shaft 30. In Figure 2, the interior of the housing 40 is considered as being on the right of the rotary seal 10, whilst a region external to the housing 40 is considered as being on the left of the rotary seal 10.

A leakage path, or passage, is formed that allows fluid from within the housing 40 to enter the rotary seal 10. A small amount of fluid from the housing 40 is allowed to leak past the primary sealing mechanism 21 to enter the internal volume 13, providing lubrication for the sealing surface 22 of the primary sealing mechanism 21. The fluid then flows into the reservoir 24. In embodiments where the rotary seal 10 includes wiper seal 19 and/or wiper seal 20, the fluid enters the rotary seal 10 through the primary sealing mechanism 21 and then flows past the wiper seals 19, 20 before entering the reservoir 24.

Within the reservoir, the fluid is absorbed and/or adsorbed by the sorbent material 25. Thus, the fluid is held in or on the sorbent material 25 and prevented from leaking past the wiper seal 18 and out of the rotary seal 10. Thus, the disclosure provides the significant advantage of enabling lubrication of the sealing surface whilst preventing leaked fluid from contaminating the surrounding environment.

In the event that dirt and contaminants from outside the housing enter the rotary seal 10 past the wiper seal 18, the sorbent material 25 may act to trap the dirt and contaminants within the reservoir 24 and/or internal volume 13. Furthermore, wiper seal 19 and/or wiper seal 20 may be provided to help prevent the flow of dirt and contaminants from the reservoir 24 to the primary sealing mechanism 21.

## Claims

1. A rotary seal (10) for sealing around shafts in flight controls of an aircraft, the rotary seal comprising:
an annular first sealing surface for sealing against a housing (40);
an annular second sealing surface (22) for sealing against a rotatable surface;
a reservoir (24) arranged for receiving a fluid that is leaked past the second sealing surface; and
a sorbent material (25) within the reservoir for absorbing and/or adsorbing the fluid received within the reservoir,
**characterised in that** the sorbent material (25) is a powder.

2. The rotary seal (10) of claim 1, wherein the first sealing surface and the second sealing surface (22) are provided by an annular housing seal (11) and wherein the rotary seal further comprises a further annular seal (12) for sealing against a rotary cylindrical surface within the housing (40), the further annular seal being rotatable with respect to the housing seal;
wherein the rotatable surface comprises a surface of the further annular seal.

3. The rotary seal (10) of claim 2, wherein the reservoir (24) is arranged between the housing seal and the further annular seal.

4. The rotary seal (10) of claim 1, 2 or 3, wherein the powder comprises a superabsorbent polymer or aluminium oxide.

5. The rotary seal (10) of any preceding claim, wherein the sorbent material (25) is coupled to an internal surface of the rotary seal that defines the reservoir (24).

6. The rotary seal (10) of any preceding claim, wherein the second sealing surface (22) provides a primary sealing mechanism (21) for the rotary seal, the primary sealing mechanism comprising a self-energised seal or an energised seal having an energiser (23) which provides a sealing force directed radially inwards;
optionally wherein when the primary sealing mechanism is an energised seal the energiser is a metallic spring (23) or comprises an elastic material, wherein an elastic material is preferably selected from silicone, fluorocarbons and ethylene propylene diene Monomer (M-class) rubber (EPDM).

7. The rotary seal (10) of any preceding claim, wherein the rotary seal is a cassette seal.

8. The rotary seal (10) of claim 2, or of any of claims 3 to 7 when dependent on claim 2, wherein the housing seal (11) and the further annular seal (12) each comprise a structural member (14, 15) overmolded with an elastomeric material (16, 17);
preferably wherein the structural members (14, 15) are made from any one of stainless steel, titanium nitride coated steel, hardened steel, glass fiber reinforced polyether ether ketone (PEEK) or carbon fiber reinforced polyether ether ketone (PEEK);
and/or wherein the elastomeric material is any one of carbon fiber reinforced polytetrafluoroethylene (PTFE), aromatic polymer fiber reinforced polytetrafluoroethylene (PTFE), glass fiber reinforced polytetrafluoroethylene (PTFE), fluoroelastomer (FKM), vinyl methyl silicone (VMQ), fluoro silicone (FMQ), ethylene propylene (EP), polyether ether ketone (PEEK), polyurethane (PU), alkyl acrylate copolymer (ACM), acrylonitrile butadiene rubber, nitrile butadiene rubber (NBR) or perfluoroelastomer (FFKM).

9. The rotary seal (10) of claim 2, or of any of claims 3 to 8 when dependent on claim 2, wherein an inner diameter of the further annular seal (12) is less than 55 mm, preferably between 30 mm and 50 mm;
and/or wherein an outer diameter of the housing seal (11) is less than 75 mm, preferably between 50 mm and 70 mm.

10. The rotary seal (10) of any preceding claim, wherein the rotary seal further comprises at least one wiper seal (18) arranged to prevent ingress of contaminants into the reservoir (24); and/or
wherein the rotatory seal further comprises at least one wiper seal (19, 20) arranged to prevent egress of contaminants from the reservoir past the second sealing surface (22).

11. A method of sealing around a rotary cylindrical surface within a housing (40) using a rotary seal (10) provided on the cylindrical surface, wherein the rotary seal comprises an annular first sealing surface for sealing against the housing (40) and an annular second sealing surface (22) for sealing against a rotating surface, the method comprising:
allowing fluid to leak past the second sealing surface for lubrication of the second sealing surface;
collecting the fluid in a reservoir (24) within the rotary seal; and
absorbing and/or adsorbing the fluid within the reservoir to hold the fluid within the rotary seal and prevent leakage of the fluid out of the reservoir,
wherein the fluid collected within the reservoir (24) is absorbed and/or adsorbed by a sorbent material (25) provided within the reservoir,
**characterised in that** the sorbent material is a powder.

12. The method of claim 11, wherein the rotary seal (10) comprises an annular housing seal (11) for sealing against the housing (40) and a further annular seal (12) for sealing against the cylindrical surface within the housing, the further annular seal being rotatable with respect to the housing seal;
wherein the housing seal comprises the first annular sealing surface and the second annular sealing surface (22), and wherein the rotating surface comprises a surface of the further annular seal;
preferably wherein the reservoir (24) is arranged between the housing seal and the further annular seal.

13. An assembly comprising:
a shaft (30) and a housing (40), wherein the shaft (30) extends through an opening in a housing (40); and
a rotary seal (10) as claimed in any of claims 1 to 10;
wherein the rotary seal is mounted on the shaft for sealing between the shaft and the housing.

14. A flight control system comprising an assembly as claimed in claim 13.

15. A method of installing a rotary seal (10) as claimed in any of claims 1 to 10, comprising deploying the rotary seal between the outside of a rotary cylindrical surface and an opening in a housing (40).

## Patentansprüche

1. Gleitringdichtung (10) zum Abdichten von Wellen in der Flugsteuerung eines Luftfahrzeugs, wobei die Gleitringdichtung Folgendes umfasst:
eine ringförmige erste Dichtungsfläche zum Abdichten eines Gehäuses (40) ;
eine ringförmige zweite Dichtungsfläche (22) zum Abdichten einer drehbaren Fläche;
einen Behälter (24), der dazu angeordnet ist, ein Fluid aufzunehmen, das an der zweiten Dichtungsfläche ausgetreten ist;
und ein Sorptionsmittel (25) in dem Behälter zum Absorbieren und/oder Adsorbieren des Fluids, das in dem Behälter aufgenommen ist, **dadurch gekennzeichnet, dass** das Sorptionsmittel (25) ein Pulver ist.

2. Gleitringdichtung (10) nach Anspruch 1, wobei die erste Dichtungsfläche und die zweite Dichtungsfläche (22) durch eine ringförmige Gehäusedichtung (11) bereitgestellt sind und wobei die Gleitringdichtung weiterhin eine weitere ringförmige Dichtung (12) zum Abdichten einer Gleitringzylinderfläche in dem Gehäuse (40) umfasst, wobei die weitere ringförmige Dichtung bezogen auf die Gehäusedichtung drehbar ist;
wobei die drehbare Fläche eine Fläche der weiteren ringförmigen Dichtung umfasst.

3. Gleitringdichtung (10) nach Anspruch 2, wobei der Behälter (24) zwischen der Gehäusedichtung und der weiteren ringförmigen Dichtung angeordnet ist.

4. Gleitringdichtung (10) nach Anspruch 1, 2 oder 3, wobei das Pulver einen Superabsorber oder ein Aluminiumoxid umfasst.

5. Gleitringdichtung (10) nach einem der vorstehenden Ansprüche, wobei das Sorptionsmittel (25) an eine Innenfläche der Gleitringdichtung gekoppelt ist, welche den Behälter (24) definiert.

6. Gleitringdichtung (10) nach einem der vorstehenden Ansprüche, wobei die zweite Dichtungsfläche (22) einen primären Dichtungsmechanismus (21) für die Gleitringdichtung bereitstellt, wobei der primäre Dichtungsmechanismus eine selbstverstärkende Dichtung oder eine verstärkte Dichtung umfasst, die einen Verstärker (23) aufweist, der eine Dichtungskraft bereitstellt, die radial nach innen gerichtet ist;
optional wobei der Verstärker eine metallische Feder (23) ist oder einen elastischen Werkstoff umfasst, wenn der primäre Dichtungsmechanismus eine verstärkte Dichtung ist, wobei ein elastischer Werkstoff vorzugsweise ausgewählt ist aus Silikon, Fluorkohlenwasserstoffen und M-Klasse-Ethylen-Propylen-Dien-Monomer-Kautschuk (M-Klasse EPDM).

7. Gleitringdichtung (10) nach einem der vorstehenden Ansprüche, wobei die Gleitringdichtung eine Kassettendichtung ist.

8. Gleitringdichtung (10) nach Anspruch 2 oder einem der Ansprüche 3 bis 7, wenn von Anspruch 2 abhängig, wobei die Gehäusedichtung (11) und die weitere ringförmige Dichtung (12) jeweils ein Strukturelement (14, 15) umfassen, das mit einem elastisch verformbaren Werkstoff (16, 17) umspritzt ist; vorzugsweise wobei die Strukturelemente (14, 15) hergestellt sind aus einem von Edelstahl, titannitridbeschichtetem Stahl, gehärtetem Stahl, glasfaserverstärktem Polyetheretherketon (PEEK) oder kohlefaserverstärktem Polyetheretherketon (PEEK);
und/oder wobei der elastisch verformbare Werkstoff eines ist von einem kohlefaserverstärkten Polytetrafluorethylen (PTFE), einem aromatischen polymerfaserverstärkten Polytetrafluorethylen (PTFE), einem glasfaserverstärkten Polytetrafluorethylen (PTFE), einem Fluorelastomer (FKM), einem Vinylmethylsilikon (VMQ), einem Fluorsilikon (FMQ), einem Ethylenpropylen (EP), einem Polyetheretherketon (PEEK), einem Polyurethan (PU), einem Alkylacrylat-Copolymer (ACM), einem Acrylnitril-Butadien-Kautschuk, einem Nitril-Butadien-Kautschuk (NBR) oder einem Perfluorelastomer (FFKM).

9. Gleitringdichtung (10) nach Anspruch 2 oder einem der Ansprüche 3 bis 8, wenn von Anspruch 2 abhängig, wobei ein Innendurchmesser der weiteren ringförmigen Dichtung (12) weniger als 55 mm beträgt, vorzugsweise zwischen 30 mm und 50 mm;
und/oder wobei ein Außendurchmesser der Gehäusedichtung (11) weniger als 75 mm beträgt, vorzugsweise zwischen 50 mm und 70 mm.

10. Gleitringdichtung (10) nach einem der vorstehenden Ansprüche, wobei die Gleitringdichtung ferner mindestens eine Abstreiferdichtung (18) umfasst, die dazu angeordnet ist, ein Eindringen von Verunreinigungen in den Behälter (24) zu verhindern; und/oder
wobei die Gleitringdichtung ferner mindestens eine Abstreiferdichtung (19, 20) umfasst, die dazu angeordnet ist, ein Ausdringen von Verunreinigungen aus dem Behälter über die zweite Dichtungsfläche (22) hinweg zu verhindern.

11. Verfahren zum Abdichten einer Gleitringzylinderfläche in einem Gehäuse (40) mithilfe einer Gleitringdichtung (10), die an der zylindrischen Fläche bereitgestellt ist, wobei die Gleitringdichtung eine ringförmige erste Dichtungsfläche zum Abdichten des Gehäuses (40) und eine ringförmige zweite Dichtungsfläche (22) zum Abdichten einer sich drehenden Fläche umfasst, wobei das Verfahren Folgendes umfasst:
einem Fluid zu erlauben, zur Schmierung der zweiten Dichtungsfläche über die zweite Dichtungsfläche hinweg auszutreten;
Sammeln des Fluids in einem Behälter (24) in der Gleitringdichtung; und
Absorbieren und/oder Adsorbieren des Fluids in dem Behälter, um das Fluid in der Gleitringdichtung zu behalten und ein Austreten des Fluids aus dem Behälter heraus zu verhindern,
wobei das in dem Behälter (24) gesammelte Fluid von einem Sorptionsmittel (25) absorbiert und/oder adsorbiert wird, das in dem Behälter bereitgestellt ist,
**dadurch gekennzeichnet, dass** das Sorptionsmittel ein Pulver ist.

12. Verfahren nach Anspruch 11, wobei die Gleitringdichtung (10) eine ringförmige Gehäusedichtung (11) zum Abdichten des Gehäuses (40) und eine weitere ringförmige Dichtung (12) zum Abdichten der zylindrischen Fläche in dem Gehäuse umfasst, wobei die weitere ringförmige Dichtung drehbar ist bezogen auf die Gehäusedichtung;
wobei die Gehäusedichtung die erste ringförmige Dichtungsfläche und die zweite ringförmige Dichtungsfläche (22) umfasst, und wobei die sich drehende Fläche eine Fläche der weiteren ringförmigen Dichtung umfasst;
vorzugsweise wobei der Behälter (24) zwischen der Gehäusedichtung und der weiteren ringförmigen Dichtung angeordnet ist.

13. Baugruppe, Folgendes umfassend:
eine Welle (30) und ein Gehäuse (40), wobei sich die Welle (30) durch eine Öffnung in einem Gehäuse (40) erstreckt; und
eine Gleitringdichtung (10) nach einem der Ansprüche 1 bis 10;
wobei die Gleitringdichtung auf der Welle angebracht ist, um zwischen der Welle und dem Gehäuse abzudichten.

14. Flugsteuerungssystem, umfassend eine Baugruppe nach Anspruch 13.

15. Verfahren zum Installieren einer Gleitringdichtung (10) nach einem der Ansprüche 1 bis 10, umfassend ein Einsetzen der Gleitringdichtung zwischen der Außenseite einer Gleitringzylinderfläche und einer Öffnung in einem Gehäuse (40).

## Revendications

1. Joint rotatif (10) pour assurer l'étanchéité autour d'arbres dans des commandes de vol d'un aéronef, le joint rotatif comprenant :
une première surface d'étanchéité annulaire destinée à assurer l'étanchéité vis-à-vis d'un logement (40) ;
une seconde surface d'étanchéité annulaire (22) destinée à assurer l'étanchéité vis-à-vis d'une surface rotative ;
un réservoir (24) agencé pour recevoir un fluide qui a fui au-delà de la seconde surface d'étanchéité ; et
un matériau sorbant (25) à l'intérieur du réservoir destiné à absorber et/ou adsorber le fluide reçu à l'intérieur du réservoir,
**caractérisé en ce que** le matériau sorbant (25) est une poudre.

2. Joint rotatif (10) selon la revendication 1, dans lequel la première surface d'étanchéité et la seconde surface d'étanchéité (22) sont fournies par un joint de logement annulaire (11) et dans lequel le joint rotatif comprend en outre un autre joint annulaire (12) destiné à assurer l'étanchéité vis-à-vis d'une surface cylindrique rotative à l'intérieur du logement (40), l'autre joint annulaire étant rotatif par rapport au joint de logement ;
dans lequel la surface rotative comprend une surface de l'autre joint annulaire.

3. Joint rotatif (10) selon la revendication 2, dans lequel le réservoir (24) est agencé entre le joint de logement et l'autre joint annulaire.

4. Joint rotatif (10) selon la revendication 1, 2 ou 3, dans lequel la poudre comprend un polymère ou oxyde d'aluminium superabsorbant.

5. Joint rotatif (10) selon une quelconque revendication précédente, dans lequel le matériau sorbant (25) est couplé à une surface interne du joint rotatif qui définit le réservoir (24).

6. Joint rotatif (10) selon une quelconque revendication précédente, dans lequel la seconde surface d'étanchéité (22) fournit un mécanisme d'étanchéité principal (21) pour le joint rotatif, le mécanisme d'étanchéité principal comprenant un joint à activation automatique ou un joint activé ayant un dispositif d'activation (23) qui fournit une force d'étanchéité dirigée radialement vers l'intérieur ;
éventuellement dans lequel lorsque le mécanisme d'étanchéité principal est un joint activé, le dispositif d'activation est un ressort métallique (23) ou comprend un matériau élastique, dans lequel un matériau élastique est de préférence choisi parmi silicone, fluorocarbones et caoutchouc de terpolymère d'éthylène-propylène-diène (classe M) (EPDM).

7. Joint rotatif (10) selon une quelconque revendication précédente, dans lequel le joint rotatif est un joint à cassette.

8. Joint rotatif (10) selon la revendication 2, ou l'une quelconque des revendications 3 à 7 lorsqu'elles dépendent de la revendication 2, dans lequel le joint de logement (11) et l'autre joint annulaire (12) comprennent chacun un organe structurel (14, 15) surmoulé avec un matériau élastomère (16, 17) ;
de préférence dans lequel les éléments structuraux (14, 15) sont fabriqués à partir d'un quelconque parmi acier inoxydable, acier revêtu de nitrure de titane, acier durci, polyéther éther cétone (PEEK) renforcé par de la fibre de verre ou polyéther éther cétone (PEEK) renforcé par de la fibre de carbone ;
et/ou dans lequel le matériau élastomère est l'un quelconque parmi polytétrafluoroéthylène (PTFE) renforcé par de la fibre de carbone, polytétrafluoroéthylène (PTFE) renforcé par de la fibre de polymère aromatique, polytétrafluoroéthylène (PTFE) renforcé par de la fibre de verre, fluoroélastomère (FKM), silicone méthylvinylique (VMQ), fluorosilicone (FMQ), éthylène propylène (EP), polyéther éther cétone (PEEK), polyuréthane (PU), copolymère d'acrylate d'alkyle (ACM), caoutchouc d'acrylonitrile/butadiène, caoutchouc de nitrile/butadiène (NBR) ou perfluoroélastomère (FFKM).

9. Joint rotatif (10) selon la revendication 2, ou l'une quelconque des revendications 3 à 8 lorsqu'elles dépendent de la revendication 2, dans lequel un diamètre interne de l'autre joint annulaire (12) est inférieur à 55 mm, de préférence entre 30 mm et 50 mm ;
et/ou dans lequel un diamètre externe du joint de logement (11) est inférieur à 75 mm, de préférence entre 50 mm et 70 mm.

10. Joint rotatif (10) selon une quelconque revendication précédente, dans lequel le joint rotatif comprend en outre au moins un joint racleur (18) agencé pour empêcher la pénétration de contaminants dans le réservoir (24) ; et/ou
dans lequel le joint rotatif comprend en outre au moins un joint racleur (19, 20) agencé pour empêcher la pénétration de contaminants depuis le réservoir au-delà de la seconde surface d'étanchéité (22).

11. Procédé d'étanchéisation autour d'une surface cylindrique rotative à l'intérieur d'un logement (40) au moyen d'un joint rotatif (10) fourni sur la surface cylindrique, dans lequel le joint rotatif comprend une première surface d'étanchéité annulaire pour assurer l'étanchéité vis-à-vis du logement (40) et une seconde surface d'étanchéité annulaire (22) pour assurer l'étanchéité vis-à-vis d'une surface rotative, le procédé comprenant :
le fait de permettre à du fluide de fuir au-delà de la seconde surface d'étanchéité pour lubrification de la seconde surface d'étanchéité ;
la collecte du fluide dans un réservoir (24) à l'intérieur du joint rotatif ; et
l'absorption et/ou l'adsorption du fluide à l'intérieur du réservoir pour maintenir le fluide à l'intérieur du joint rotatif et empêcher une fuite de fluide hors du réservoir,
dans lequel le fluide collecté à l'intérieur du réservoir (24) est absorbé et/ou adsorbé par un matériau sorbant (25) fourni à l'intérieur du réservoir,
**caractérisé en ce que** le matériau sorbant est une poudre.

12. Procédé selon la revendication 11, dans lequel le joint rotatif (10) comprend un joint de logement annulaire (11) pour assurer l'étanchéité vis-à-vis du logement (40) et un autre joint annulaire (12) pour assurer l'étanchéité par rapport à la surface cylindrique à l'intérieur du logement, l'autre joint annulaire étant rotatif par rapport au joint de logement ; dans lequel le joint de logement comprend la première surface d'étanchéité annulaire et la seconde surface d'étanchéité annulaire (22), et dans lequel la surface rotative comprend une surface de l'autre joint annulaire ;
de préférence dans lequel le réservoir (24) est agencé entre le joint de logement et l'autre joint annulaire.

13. Ensemble comprenant :
un arbre (30) et un logement (40), dans lequel l'arbre (30) s'étend à travers une ouverture dans un logement (40) ; et
un joint rotatif (10) selon l'une quelconque des revendications 1 à 10 ;
dans lequel le joint rotatif est monté sur l'arbre pour assurer l'étanchéité entre l'arbre et le logement.

14. Système de commande de vol comprenant un ensemble selon la revendication 13.

15. Procédé d'installation d'un joint rotatif (10) selon l'une quelconque des revendications 1 à 10, comprenant le déploiement du joint rotatif entre l'extérieur d'une surface cylindrique rotative et une ouverture dans un logement (40).
